# EUROPÄISCHE PATENTANMELDUNG

(11) **EP 1 036 730 A2**
(43) Veröffentlichungstag der Anmeldung: **20.09.2000**
(21) Anmeldenummer: 00103412.3
(22) Anmeldetag: 24.02.2000
(51) Int. Cl.: B62D 65/00

(54) **Verfahren zur toleranzgenauen Montage von Bestandteilen eines Kraftfahrzeug-Vorderwagens sowie Anornung zur Durchführung des Verfahrens**

(30) Priorität: 18.03.1999 DE 19912181
(71) Anmelder: Volkswagen Aktiengesellschaft, 38436 Wolfsburg (DE)
(72) Erfinder: Zimmermann, Leo, 38446 Wolfsburg (DE)

(57) **Zusammenfassung**

Beim Einbau von Vorderwagendeckel (3), Deckelschloß (16, 19), Stoßfängerabdeckung (4), Kühlerschutzgitter (5) und in eine Deckelausnehmung (7) hineinragendem Fortsatz (6) am Gitter (5) (zur Aufnahme eines Herstelleremblems (10)) muß eine Vielzahl von sich gegenseitig beeinflussenden Toleranzen berücksichtigt werden: Beiderseits des Deckels (3) und beiderseits des Gitters (5) müssen jeweils gleiche Spaltmaße vorliegen, der Spalt (c) zwischen Fortsatz (6) und Rand der Deckelausnehmung (7) muß über seine gesamte Länge eine konstante Spaltweite aufweisen. Diese Forderungen schließen eine definierte Positionierung des Deckelschlosses (16, 19) ein. Die Erfindung sieht zwecks Vermeidung einer Toleranzkette vor, an einem zwischen den Kotflügeln (1, 2) quer einzusetzenden Montageträger (12) eine Vertiefung (11) als mittige Referenzmarkierung vorzusehen, ihn ausgerichtet bezüglich der Fahrzeug-Längsmittelebene einzubauen und zur Ausrichtung der genannten anderen Teile auf diese Referenzmarkierung (11) zurückzugreifen. Der Fortsatz (6) ist dazu in Querrichtung begrenzt schwenkbar am Gitter (5) gehalten und greift mit einem rückwärtigen Stift (26) spielfrei in die Vertiefung (11) ein.

## Beschreibung

Die Erfindung betrifft ein Verfahren gemäß dem Oberbegriff des Patentanspruchs 1 sowie eine Anordnung zur Durchführung des Verfahrens.

Bei der Montage verschiedener Bestandteile eines Kraftfahrzeug-Vorderwagens müssen schon aus Gründen eines positiven optischen Eindrucks verschiedene Toleranzen eingehalten werden, die in einem inneren Zusammenhang stehen. So müssen beispielsweise die Spaltweiten zwischen einem Vorderwagendeckei, in der Regel einer Motorhaube, einerseits und vorderen Kotflügeln andererseits vorgegebene gleiche Werte aufweisen. Das bedeutet, daß die zusammenwirkenden Bestandteile von Deckel und karosserieseitigen Schloßbaugruppen definiert positioniert sein müssen. Weiterhin muß aber auch dafür gesorgt sein, daß ein Kühlerschutzgitter an einem Montageträger, der auch die karosserieseitige Baugruppe des Deckelschlosses trägt, so positioniert ist, daß seitliche Spalte, die das Kühlerschutzgitter mit einer Stoßfängerabdeckung bildet, gleich groß sind.

Die Bedeutung der Einhaltung verschiedener Toleranzwerte wird dann besonders evident, wenn, wie bei dem erfindungsgemäßen Verfahren vorausgesetzt, das Kühlerschutzgitter gleichsam mit einem Fortsatz in eine Ausnehmung des Deckels hineinragt. Der zwischen diesem Fortsatz einerseits und dem Rand der Deckelausnehmung andererseits vorhandene, beispielsweise längs eines Kreisbogens verlaufende Spalt muß über seine gesamte Länge eine konstante Spaltweite aufweisen, damit nicht der optische Eindruck eines schiefen oder verzogenen Deckels bzw. einer unsauberen Montage des Kühlerschutzgitters entsteht. Gerade bei diesem Spalt zwischen Deckelausnehmung und Fortsatz des Kühlerschutzgitters können sich aktuelle Toleranzwerte von Deckelausrichtung und Positionierung des Kühlerschutzgitters in nachteiliger Weise summieren.

Der Erfindung liegt die Aufgabe zugrunde, mit einfachen, großserienfreundlichen Maßnahmen ein gattungsgemäßes Verfahren bzw. eine Anordnung zu seiner Durchführung zu schaffen, das bzw. die die beschriebene Summation von Toleranzwerten vermeidet.

Die erfindungsgemäße Lösung des Problems besteht in einem Verfahren mit den Merkmalen des Hauptanspruchs, vorteilhafte Ausbildungen von Anordnungen zur Durchführung des Verfahrens beschreiben die Unteransprüche.

Ein wesentliches Merkmal des erfindungsgemäßen Verfahrens besteht also darin, daß durch Rückgriff auf ein und dieselbe Referenzmarkierung an dem Montageträger bei der Montage verschiedener Vorderwagen-Bestandteile, beispielsweise des Deckelschlosses, der Stoßfängerabdeckung, der Scheinwerfer und des Fortsatzes des Kühlerschutzgitters, zurückgegriffen bzw. Bezug genommen wird. Dabei wurde verständlicherweise zuvor dafür gesorgt, daß diese Referenzmarkierung eine vorgegebene Lage bezüglich der Fahrzeuglängsmittelebene einnimmt, so daß sich durch Bezugnahme auf die Referenzmarkierung auch eine vorgegebene Positionierung der verschiedenen Vorderwagenbestandteile bezüglich der eigentlichen Karosserie ergibt. Durch den Rückgriff auf die definierte Referenzmarkierung wird eine zur Summation der einzelnen Toleranzwerte führende "Toleranzkette" vermieden.

Die Erfindung wird im folgenden anhand eines in der Zeichnung dargestellten Ausführungsbeispiels erläutert. Es zeigen:
- Figur 1: perspektivisch eine Vorderansicht eines Vorderwagens zur Erläuterung der der Erfindung zugrundeliegenden Problematik,
- Figur 2: einen Montageträger vor dem Einbau in die eigentliche Karosserie, ebenfalls perspektivisch schräg von vorne,
- Figur 3: das Frontend nach Einbau des Montageträgers bei geöffnetem Deckel,
- Figur 4: ebenfalls perspektivisch schräg von vorne die Verhältnisse bei der Montage der Stoßfängerabdeckung am eigentlichen Vorderwagen,
- Figur 5: ebenfalls perspektivisch schräg von vorne den Einbau des Kühlerschutzgitters nach erfolgter Montage der Stoßfängerabdeckung,
- Figur 6: die Schnittansicht gemäß VI-VI und
- Figur 7: die Schnittansicht gemäß VII-VII in den Figuren 4 und 5 und
- Figur 8: die Schnittansicht gemäß VIII-VIII in Figur 7.

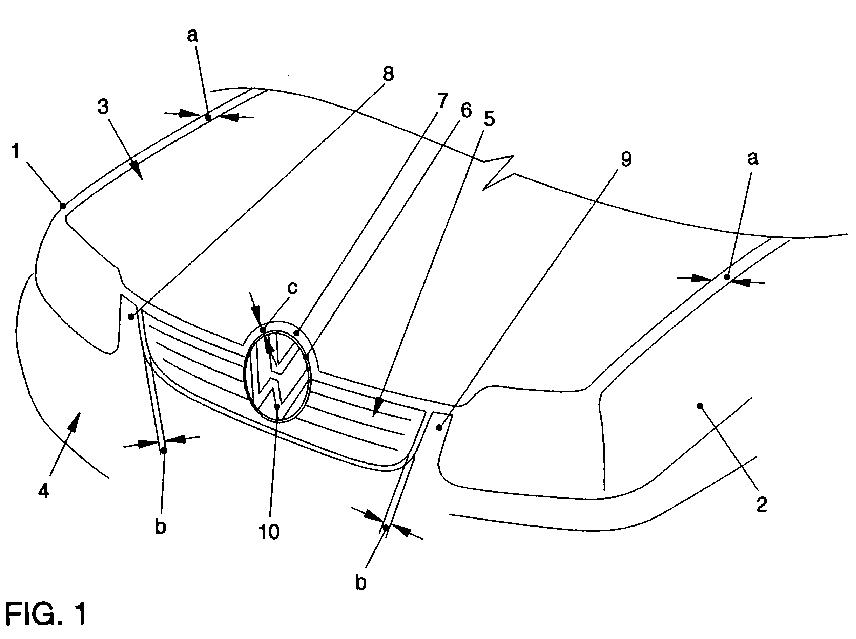

Betrachtet man zunächst zur Verdeutlichung des Problems Figur 1, so sind von dem Vorderwagen die beiden Kotflügel 1 und 2, der hier eine Motorhaube darstellende Deckel 3, die Stoßfängerabdeckung 4 und das Kühlerschutzgitter 5 mit seinem hier ringförmigen Fortsatz 6 angedeutet, der in Richtung nach oben in die Ausnehmung 7 des Deckels 3 hineinragt. Zwischen den Seitenrändern des Deckels 3 einerseits und Rändern bzw. Kanten der Kotflügel 1 und 2 andererseits bestehen Spalte a, die bei einwandfreier Montage des Deckels 3 gleiche Spaltweiten haben. Bereits an dieser Stelle müssen enge Toleranzen eingehalten werden. Schon jetzt sei darauf hingewiesen, daß sich diese Toleranzbedingungen auch auf die Baugruppen des in Figur 1 nicht dargestellten Deckelschlosses beziehen, die teils deckelseitig, teils karosserieseitig angeordnet sind.

Weiterhin erkennt man zwischen den Seitenkanten des Kühlerschutzgitters 5 einerseits und den hörnerartigen Fortsätzen 8 und 9 der Stoßfängerabdeckung 4 andererseits ebenfalls Spalte b, deren Spaltweiten gleich groß sein müssen.

Wie erläutert, weist das Kühlerschutzgitter 5 den Fortsatz 6 auf, der in die Ausnehmung 7 des Deckels 3 hineinragt, und zwar wiederum unter Bildung eines Spalts c, der bei der hier ringförmig angenommenen Konfiguration des Fortsatzes 6 sich längs eines Kreisbogens erstreckt. In diesem Ausführungsbeispiel ist angenommen, daß der Fortsatz 6 zur Aufnahme eines Herstelleremblems 10 dient. Verständlicherweise kann hier auch eine Verzierung oder dergleichen untergebracht werden. Bezüglich des Spalts c besteht die Forderung, daß dieser über seine gesamte Länge dieselbe Spaltweite aufweisen muß.

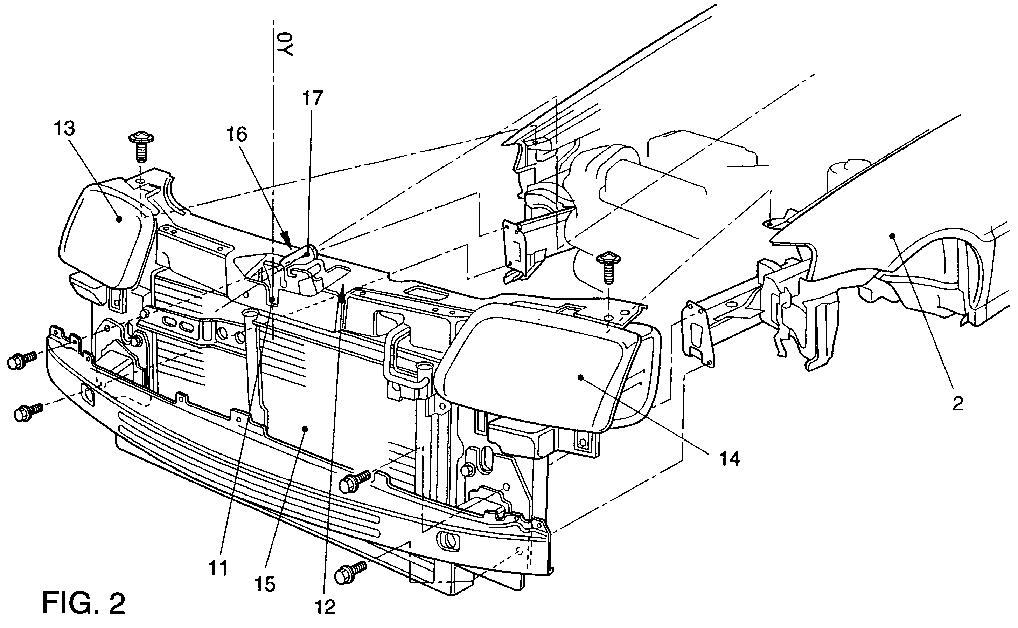

Schon diese Erläuterung macht klar, daß die Einhaltung von Toleranzen bezüglich der Weite der Spalte a und die zuletzt erläuterte Anforderung bezüglich der Konstanz der Spaltweite des Spalts c einander gegenseitig erschweren, da jede Verstellung des Deckels 3 zur Erzielung gleicher Spaltweiten für die Spalte a auch Einfluß auf den Verlauf der Spaltweite des Spalts c hat. Nicht anders ist die Situation bezüglich der Einstellung gleicher Weiten der Spalte b und der verlangten Konstanz der Weite des Spalts c. Um diese Abhängigkeiten zu eliminieren, greift das erfindungsgemäße Verfahren bei der Positionierung der verschiedenen Vorderwagenbestandteile auf eine durch einen Spalt oder eine Vertiefung 11 (siehe Figur 2) in dem Kunststoff-Montageträger 12 gebildete Referenzmarkierung zurück. Dieser Montageträger dient in dem gezeigten Ausführungsbeispiel zur Halterung der Scheinwerfer 13 und 14 und des Kühlers 15 in definierten Lagen, wobei Form und Ausbildung dieser Teile im Rahmen der Erfindung ohne Bedeutung sind. Der also mit der mittigen Referenzmarkierung 11 angelieferte Montageträger 12 wird mittels eines lehrenartigen Werkzeugs in die eigentliche Karosserie quer eingesetzt, von der in Figur 2 nur der linke Kotflügel 2 erkennbar ist. Zur Erleichterung der Montage ist es zweckmäßig, wenn zuvor die karosserieseitige Baugruppe 16 eines Schlosses für den Deckel 3 mit der Drehfalle 17 unter Rückgriff auf die Referenzmarkierung 11 des Montageträgers 12 an diesem in einer vorgegebenen Position festgelegt worden ist. Dann kann nämlich die Drehfalle 17 - gegebenenfalls nach Schwenkung in ihre Schließstellung - zum Angriff eines die Lehre bildenden Manipulators verwendet werden, der dann den Montageträger 12 zwischen den einander zugekehrten Bänken der beiden Kotflügel 1 und 2 hält, wo dann die Montage des Montageträgers erfolgt. Der Manipulator kann beispielsweise nach Art einer Schere ausgebildet sein, die einen mittleren Stift aufweist, der in die Drehfalle 17, die ja bezüglich der Referenzmarkierung 11 ausgerichtet ist, eingreift und die mit ihren Schenkeln an den Kotflügelbänken aufliegt, so daß die Befestigung des Montageträgers 12 in einer definierten Lage bezüglich der Karosserie erfolgt.

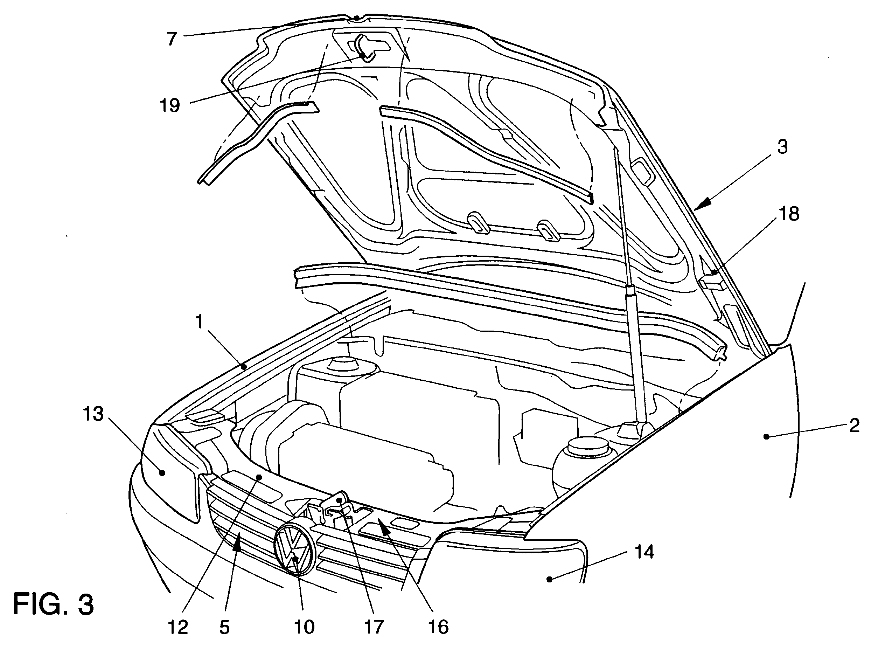

Figur 3 zeigt die Verhältnisse nach diesem Einbau des Montageträgers 12, wobei angenommen ist, daß auch das Kühlerschutzgitter 5 montiert ist. Entscheidend ist nun, daß die karosserieseitige Deckelschloßbaugruppe 16 mit der Drehfalle 17 ihre vorgegebene Position sowohl an dem Montageträger 12 als auch bezüglich der Karosserie besitzt. Nach Schließen des Deckels 3, der mittels einer üblichen Scharnieranordnung 18 an seinem hinteren Rand schwenkbar angelenkt ist, wobei diese Anlenkung jetzt zweckmäßigerweise noch nicht fest angezogen ist, gelangt nun der deckelseitige Schloßbügel 19 in Eingriff mit der Drehfalle 17, und durch Schwenken derselben in ihre Schließstellung (d.h. in der Darstellung der Figur 3 durch Verschwenken der Drehfalle 17 im Uhrzeigersinne) wird über den Eingriff der Drehfalle in den Schloßbügel 19 der Deckel 3 in seine vorgegebene Position verschoben, in der die Spalte a an seinen beiden Seiten (siehe Figur 1) gleiche Spaltweiten haben. Dabei ist verständlicherweise vorausgesetzt, daß der Schloßbügel 19 am Deckel 3 in einer vorgegebenen Lage montiert ist.

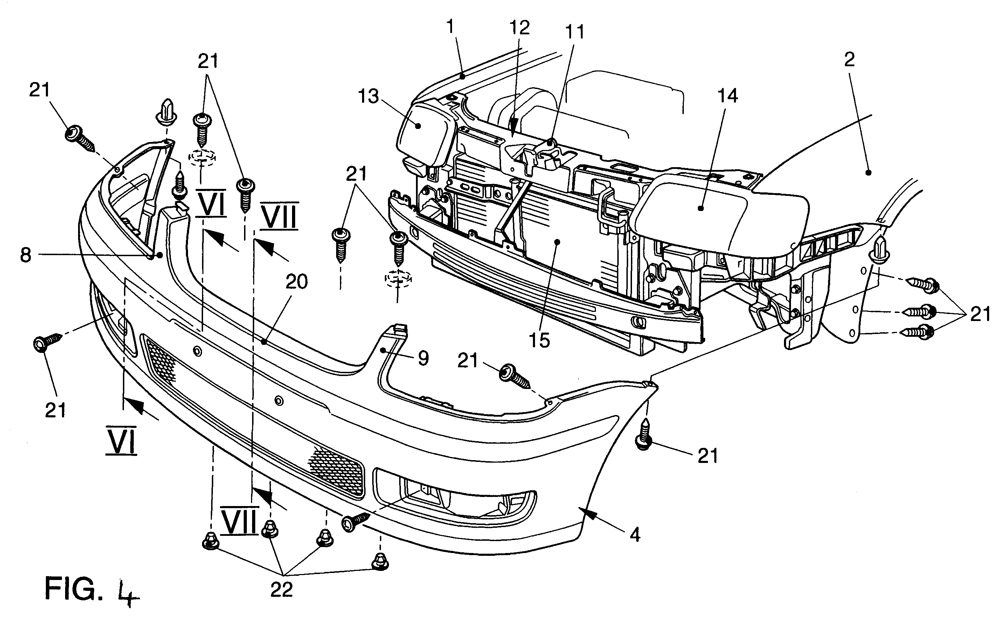

Als nächstes wird nun gemäß Figur 4 die Stoßfängerabdeckung 4 am eigentlichen Fahrzeug befestigt. Auch hier ist eine Ausrichtung erforderlich, und zwar bezüglich der Referenzmarkierung 11 des Montageträgers 12. Zu diesem Zweck weist die Stoßfängerabdeckung 4 die Ausnehmung 20 auf, die zum Eingriff eines Stifts an einem Manipulator dient, der zugleich an der Referenzmarkierung 11 (oder an der Drehfalle 17) angreift und so eine Zentrierung der Stoßfängerabdeckung 4 bei ihrer Montage sicherstellt. Die Montage der Stoßfängerabdeckung 4 als solche erfolgt mittels üblicher Befestigungsteile, wie Blechschrauben 21 und Spreizclipse 22. Ein Vorteil der Erfindung ist gerade darin zu sehen, daß sie hinsichtlich des Einsatzes von Befestigungsmitteln für die verschiedenen Bestandteile des Frontends völlige Freiheit läßt.

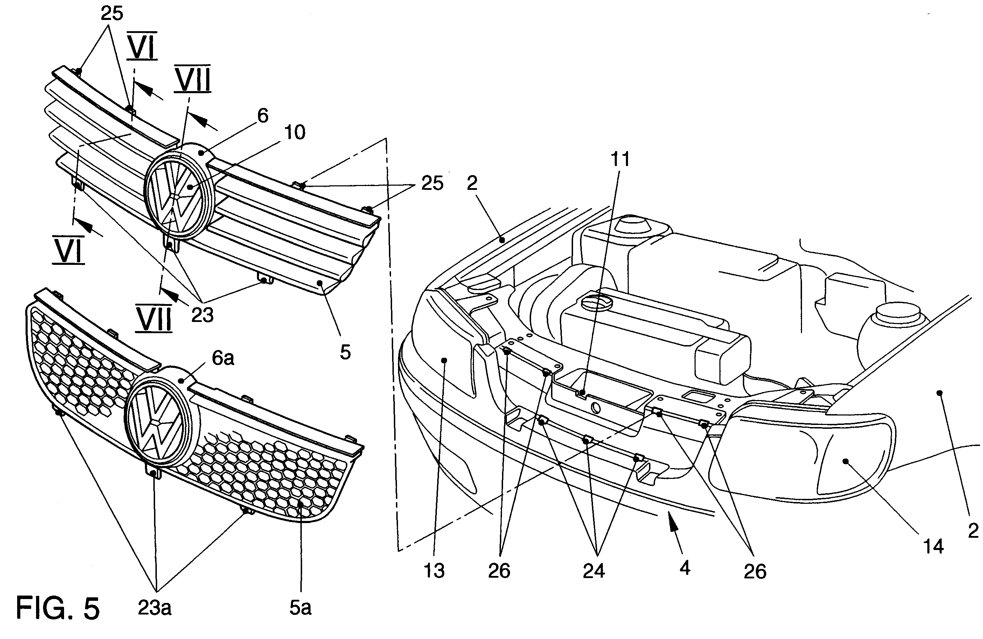

Wie Figur 4 zeigt, ist bisher das Kühlerschutzgitter 5 mit dem Fortsatz 6 noch nicht an der Karosserie montiert worden. In Figur 5 sind zwei unterschiedliche Kühlerschutzgitter gezeigt, nämlich einerseits das mit Querschlitzen versehene, bereits in Figur 1 bei 5 angedeutete Kühlerschutzgitter und ein Gitter 5a mit einer echten Gitterkonfiguration. Dieses kann ebenfalls einen Fortsatz 6a im Sinne des Fortsatzes 6 bei dem bisher behandelten Kühlerschutzgitter 5 aufweisen. Unabhängig davon, welche Konstruktion oder Form man im einzelnen dem Kühlerschutzgitter gibt, ist dieses mit nach unten weisenden Fortsätzen 23 bzw. 23a versehen, denen Aufnahmen 24 an oder in der Stoßfängerabdeckung 4 zugeordnet sind. Sowohl die Fortsätze 23 (bzw. 23a) als auch die Aufnahmen 24 haben definierte Positionen, so daß - nach erfolgter Positionierung der Stoßfängerabdeckung 4 - durch das Einstecken der Fortsätze in die Aufnahmen 24 eine Positionierung des jeweiligen Kühlerschutzgitters 5 sichergestellt ist. Weitere, nach hinten weisende Fortsätze 25 greifen nach einer kleinen Schwenkbewegung des Kühlerschutzgitters 5 um eine durch die unteren Fortsätze 23 definierte Schwenkachse in weitere Aufnahmen 26 am Montageträger 12 clipsartig ein, so daß das Kühlerschutzgitter 5 in seiner Sollposition arretiert ist.

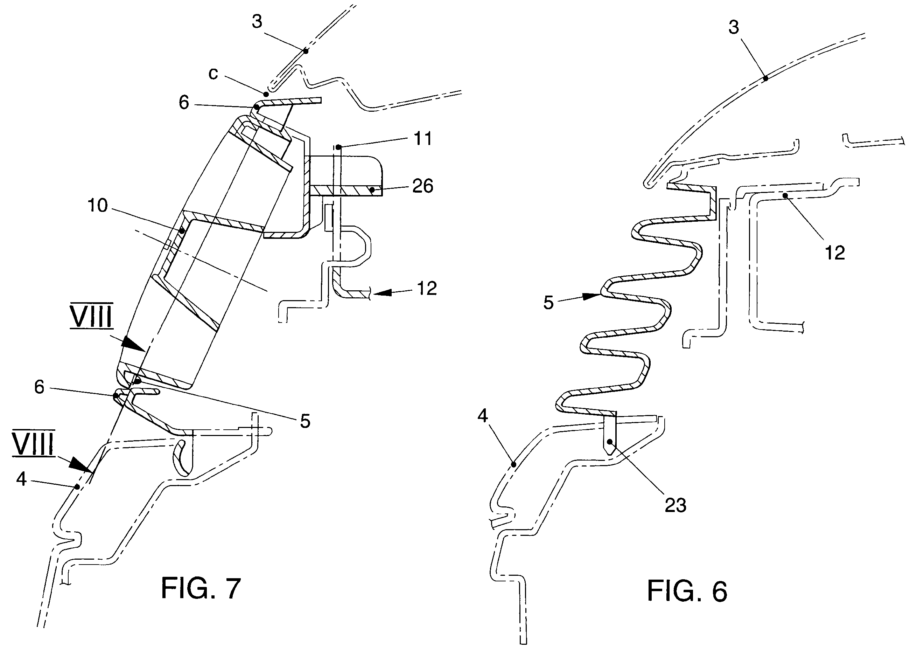

Figur 6 zeigt die Verhältnisse in der Schnittführung VI-VI, wobei auf die Darstellung der oberen clipsartigen Fortsätze 25 verzichtet ist.

Komplizierter sind die Verhältnisse im Bereich des ringförmigen Fortsatzes 6, also in dem mit VII-VII gekennzeichneten Schnitt:

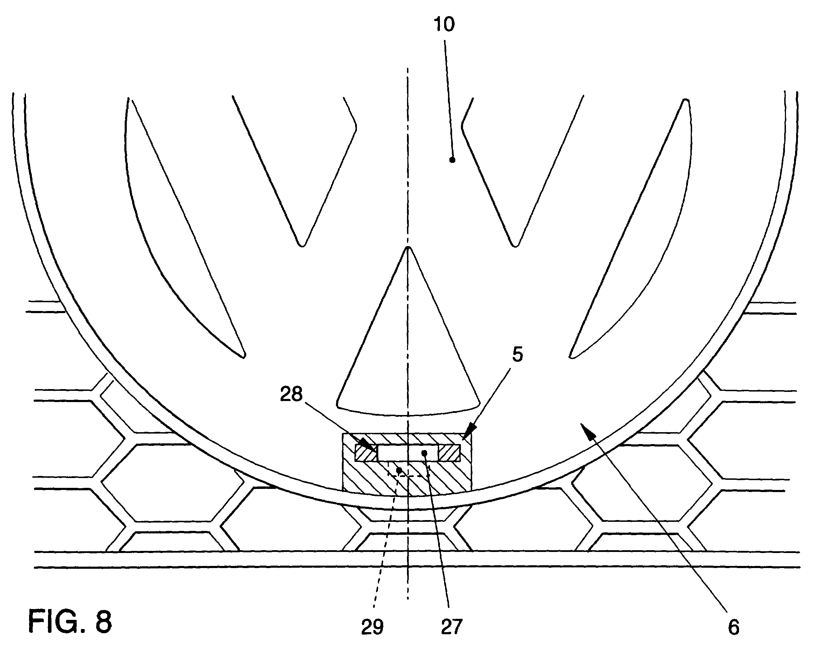

Wie in Figur 7 nur angedeutet und in Figur 8 ausführlicher dargestellt, ist der ringförmige Fortsatz 6 nur in seinem unteren Bereich in einer Querebene schwenkbar an dem Kühlerschutzgitter 5 durch Einclipsen befestigt. Seine Schwenklage wird bestimmt durch den Eingriff eines rückwärtigen Ansatzes 26 an dem ringförmigen Fortsatz 6; dieser Ansatz 26 greift in die hier schlitzartige Referenzmarkierung 11 des Montageträgers 12 ein. Da diese Referenzmarkierung 11 infolge der weiter oben beschriebenen Ausrichtung des Montageträgers 12 sowie infolge der ebenfalls oben beschriebenen Ausrichtung der karosserieseitigen Baugruppe 16 des Deckelschlosses eine definierte Lage bezüglich des Deckels 3 besitzt, ist durch diesen Eingriff des Ansatzes 26 in die Referenzmarkierung 11 auch eine konstante Weite des Spalts c zwischen Fortsatz 6 einerseits und Ausnehmung 7 des Deckels 3 andererseits sichergestellt. Dabei ist es zweckmäßig, die Teile 11 und 26 als Clipsverbindung auszubilden, die in Längsrichtung des Fahrzeugs wirksam ist, so daß der ringförmige Fortsatz 6 dort sowohl in Querrichtung als auch in Längsrichtung fixiert wird.

Figur 8 schließlich zeigt in der in Figur 7 bei VIII-VIII definierten Schnittansicht die Verhältnisse im Bereich der unteren, geringfügige Schwenkbewegungen zulassenden Verbindung zwischen dem ringförmigen Fortsatz 6 einerseits und dem Kühlerschutzgitter 5 andererseits. Das Kühlerschutzgitter 5 weist dort die Ausnehmung 27 zur Aufnahme eines zentrierenden Ansatzes 28 mit federndem Raststeg 29 an dem Fortsatz 6 auf. Die Ausnehmung 27 ist, sofern das Material des Ansatzes 28 nicht hinlänglich verformbar ist, mit geringem Spiel in senkrechter Richtung dimensioniert, so daß Teil 6 sich etwas in der Zeichenebene um einen durch die Verbindung 27, 28 gegebenen Schwenkpunkt bewegen kann, wodurch die Einführung des Ansatzes 26 (siehe Figur 7) in die Referenzmarkierung 11 des Montageträgers 12 möglich wird.

Mit der Erfindung ist demgemäß mit minimalem Aufwand eine Lösung des eingangs definierten Toleranzproblems geschaffen.

## Patentansprüche

1. Verfahren zur toleranzgenauen Montage eines Kraftfahrzeug-Vorderwagendeckels zwischen vorderen Kotflügeln, dem ein Schloß zugeordnet ist, einer vorderen Stoßfängerabdeckung, eines Kühlerschutzgitters und eines in eine vordere Ausnehmung des Deckels hineinragenden gitterseitigen Fortsatzes, insbesondere zur Aufnahme eines Herstelleremblems, gekennzeichnet durch folgende Schritte:
a) Ein Montageträger (12) wird mittig mit einer Referenzmarkierung (11) versehen.
b) Eine fahrzeugseitige Baugruppe (16) eines dem Deckel (3) zugeordneten Schlosses wird am Montageträger (12) bezüglich der Referenzmarkierung (11) ausgerichtet und befestigt.
c) Der Montageträger (12) wird querverlaufend zwischen den Kotflügelbänken der vorderen Kotflügel (1, 2) unter Ausrichtung seiner Referenzmarkierung (11) oder der auf diese ausgerichteten fahrzeugseitigen Baugruppe (16) des Schlosses bezüglich der Fahrzeuglängsmittelebene eingesetzt und befestigt.
d) Der mit einer deckelseitigen Baugruppe (19) des dem Deckel (3) zugeordneten Schlosses in vorgegebener Position bestückte, angeschlagene Deckel (3) wird in Schließlage gebracht, so daß die beiden Schloßbaugruppen (16, 19) in Eingriff gelangen.
e) Die Stoßfängerabdeckung (4) wird bezüglich der Referenzmarkierung (11) am Montageträger (12) ausgerichtet und an Montageträger (12) und/oder Karosserie befestigt.
f) Das Kühlerschutzgitter (5) wird bezüglich der Stoßfängerabdeckung (4) oder der Referenzmarkierung (11) definiert positioniert und befestigt.
g) Der in einem unteren Bereich in einer Querebene begrenzt schwenkbeweglich am Kühlerschutzgitter (5) gehaltene (bei 27, 28) Fortsatz (6) wird mit einer Markierung (26) bezüglich der Referenzmarkierung (11) des Montageträgers (12) durch Schwenkbewegung ausgerichtet und festgelegt.

2. Anordnung zur Durchführung des Verfahrens nach Anspruch 1, dadurch gekennzeichnet, daß die Referenzmarkierung des Montageträgers (12) durch eine Vertiefung (11) gebildet ist.

3. Anordnung nach Anspruch 2, dadurch gekennzeichnet, daß der Fortsatz (6) auf seiner dem Montageträger (12) zugekehrten Rückseite einen Stift (26) zum in Richtung der Schwenkbewegungen spielarmen Eingriff in die Vertiefung (11) bei ausgerichtetem Fortsatz (6) aufweist.

4. Anordnung nach Anspruch 3, dadurch gekennzeichnet, daß Stift (26) und Vertiefung (11) eine in Fahrzeuglängsrichtung wirksame Clipverbindung bilden.

5. Anordnung nach einem der Ansprüche 2 bis 4, dadurch gekennzeichnet, daß der Fortsatz (6) am Kühlerschutzgitter (5) durch eine Clipverbindung (27, 28) begrenzt schwenkbeweglich gehalten ist.

6. Anordnung nach einem der Ansprüche 2 bis 5, dadurch gekennzeichnet, daß zur definierten Positionierung des Kühlerschutzgitters (5) an der Stoßfängerabdeckung (4) an diesen steckbare Zapfen-Zapfenaufnahme-Paarungen (23, 24) vorgesehen sind.
